# EUROPÄISCHE PATENTSCHRIFT

(11) **EP 0 566 985 B1**
(45) Veröffentlichungstag und Bekanntmachung des Hinweises auf die Patenterteilung: **08.12.1999**
(21) Anmeldenummer: 93106122.0
(22) Anmeldetag: 15.04.1993
(51) Int. Cl.: G06F 13/28, G06F 13/362

(54) **Verfahren und Vorrichtung zur Übertragung von Datenpaketen**
Method and apparatus for transfer of data packets
Méthode et dispositif de transmission de paquets de données

(30) Priorität: 24.04.1992 DE 4213593
(43) Veröffentlichungstag der Anmeldung: 27.10.1993
(73) Patentinhaber: ALCATEL, 75008 Paris (FR)
(72) Erfinder: Käuffert, Uwe, W-7530 Pforzheim 12 (DE)
(74) Vertreter: Knecht, Ulrich Karl, Dipl.-Ing.

(56) Entgegenhaltungen:
- EP-A- 0 346 917
- EP-A- 0 410 382
- DE-A- 4 031 662
- US-A- 5 093 780

## Beschreibung

Die Erfindung betrifft ein Verfahren und eine Vorrichtung zur Übertragung von Datenpaketen über einen für periphere Einheit, Speicher und Prozessor gemeinsamen Daten/Adress-Bus.

Ein bekanntes Verfahren zur Übertragung von Datenpaketen über einen gemeinsamen Daten/Adress-Bus ist die Übertragung mittels direktem Speicherzugriff, von nun an DMA (Direct Memory Access)-Übertragung genannt. Zur Durchführung der DMA-Übertragung gibt es verschiedene Möglichkeiten. Die schnellste Übertragungsmöglichkeit ist die Blockübertragung. Hierbei wird, falls der Prozessor den gemeinsamen Daten/Adress-Bus anfordert, und der Daten/Adress-Bus aufgrund einer stattfindenden Datenübertragung zwischen Speicher und peripherer Einheit belegt ist, der Prozessor so lange angehalten, bis die Übertragung beendet wurde (Tietze-Schenk; Halbleiterschaltungstechnik; Springer-Verlag; Auflage 7; 1985; Seiten 672 bis 675). Bei der DMA-Übertragung kann der Prozessor während der Übertragung der Datenpakete lediglich die Befehle ausführen, die keinen Zugriff auf den gemeinsamen Daten/Adress-Bus benötigen. Falls ein Zugriff nötig ist, muß der Prozessor mit der Ausführung des Befehls warten, bis die Übertragung vollständig beendet wurde.

Ein weiteres bekanntes Verfahren zur Übertragung von Datenpaketen über einen gemeinsamen Daten/Adress-Bus ist die Steuerung der Datenübertragung vom Prozessor mit Hilfe eines Programmes (Taschenbuch der Informatik; Band 2: Struktur und Programmierung von EDV-Systemen; Springer Verlag; 1974; Seiten 327 bis 334). Hierbei ist der Prozessor während der Übertragung belegt und kann keine anderen Aufgaben übernehmen, d.h. er kann auch keine Befehle ausführen, die nicht den Daten/Adress-Bus belegen. Bei diesem Verfahren ist der Prozessor während der kompletten Übertragung der Datenpakete im Haltezustand, und eine Bearbeitung der Befehle kann erst nach Beendigung der Datenübertragung stattfinden.

Aus der DE-A1-40 31 662 ist bekannt, die Übertragung von Datenpaketen im Burst-Modus zwischen einer I/O-Einrichtung und einem Speicher über einen gemeinsamen Daten/Adress-Bus zu unterbrechen, wenn ein Zeitablaufsignal von einer programmierten Zeitgeberschaltung oder einem externen Programm während des Burst-Mode abgegeben wird. Die Übertragung wird fortgesetzt nach einer vorbestimmten Periode als Antwort auf ein Signal von der Zeitgeberschaltung oder dem externen Programm.

Der Erfindung liegt die Aufgabe zugrunde, ein Verfahren und eine Vorrichtung zu entwickeln, welches eine Übertragung von Datenpaketen zwischen Speicher und peripherer Einheit über einen gemeinsamen Daten/Adress-Bus vornimmt, ohne den Prozessor anzuhalten.

Die Aufgabe wird verfahrensgemäß gelöst durch die Lehre des ersten Patentanspruchs und vorrichtungsgemäß durch die Merkmale des fünften Patentanspruchs.

Ein Vorteil der Erfindung liegt darin, daß eine Übertragung von Datenpaketen zwischen Speicher und peripherer Einheit genau in dem Zeitraum stattfindet, in dem der Prozessor nicht auf den gemeinsamen Daten/Adress-Bus zugreift. Dieser Zeitraum entspricht der Zeit, in der der Prozessor bei der Bearbeitung von Befehlen interne Rechenoperationen durchführt, also keinen Zugriff auf den Daten/Adress-Bus benötigt. Zu dem Zeitpunkt in dem der Prozessor auf den gemeinsamen Daten/Adress-Bus zugreift, ist dieser entweder bereits wieder frei, oder die Übertragung der Datenpakete wird sofort beendet, so daß der Prozessor nicht angehalten werden muß. Bei diesem Verfahren kann die Bearbeitung der Aufgaben durch den Prozessor ohne Unterbrechung, d.h. ohne daß der Prozessor auf die Freigabe des Daten/Adress-Busses warten muß, fortgeführt werden, was eine optimierte Nutzung der Rechnerleistung zur Folge hat. Die hier erläuterte Erfindung eignet sich besonders für die Übertragung kleiner Datenpakete, da eine vollständige und schnelle Übertragung gewährleistet werden kann, da immer wieder Prozessorbefehle bearbeitet werden, bei denen der Prozessor nicht, oder für einen längeren Zeitraum nicht, auf den gemeinsamen Daten/Adress-Bus zugreifen muß.

Vorteilhafte Weiterentwicklungen des Verfahrens sind den Unteransprüchen 2 bis 4 zu entnehmen.

Nach Unteranspruch 2 wird für den Fall, daß die voreingestellte, maximale Wartezeit auf die nächste Übertragung von Datenpaketen überschritten wird, der Prozessor angehalten und in Wartestellung geschaltet, damit die Übertragung der Datenpakete zwischen Speicher und peripherer Einheit zu Ende geführt wird. Mittels dieses zusätzlichen Verfahrens wird verhindert, daß Daten, die zur Übertragung anstehen, verloren gehen.

Nach einem der Unteransprüche 3 und 4 wird einem Steuermittel mittels eines Signals der Zeitraum angezeigt, in dem der gemeinsame Daten/Adress-Bus nicht vom Prozessor belegt ist.

Nach Unteranspruch 3 wird dieses Signal vom Prozessor selbst erzeugt. Der Prozessor stellt für den gerade zu bearbeitenden Befehl fest, für welchen Zeitraum kein Zugriff auf den gemeinsamen Daten/Adress-Bus erfolgt. Ein dementsprechendes Signal zeigt dem Steuermittel diesen Zeitraum an.

Nach Unteranspruch 4 wird das Signal von einem Vergleicher erzeugt. Ein momentan ausgeführter Prozessor-Befehl wird dem Vergleicher angezeigt. Der Vergleicher vergleicht diesen Prozessor-Befehl mit einer Befehlsliste, in der für jeden möglichen Befehl der Zeitraum eingetragen ist, in dem kein Zugriff auf den Daten/Adress-Bus nötig ist. Der Zeitraum wird dem Steuermittel durch ein entsprechendes Signal angezeigt.

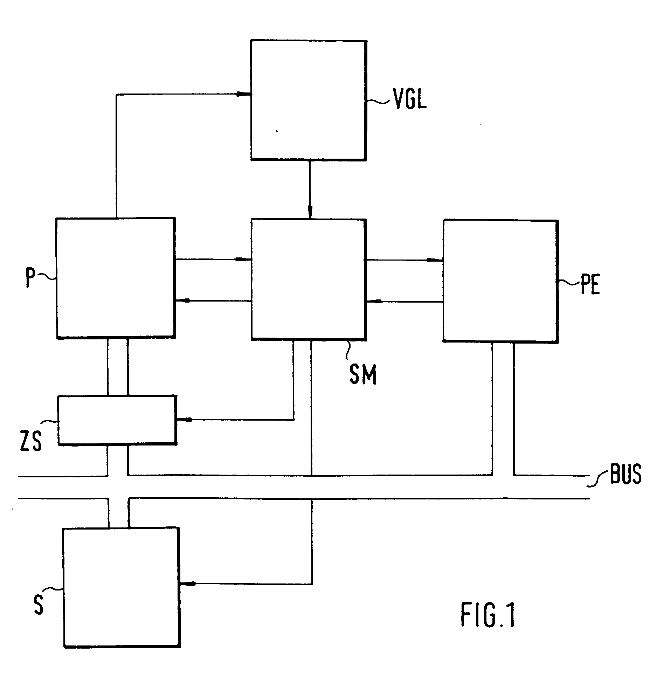

Die erfindungsgemäße Vorrichtung wird anhand der folgenden Figur 1 erläutert.

Folgende Figuren zeigen:
- Fig. 1: Blockschaltbild der erfindungsgemäßen Vorrichtung zur Übertragung von Datenpaketen über einen gemeinsamen Daten/Adress-Bus,
- Fig. 2: Steuermittel entsprechend Anspruch 7.

Eine erfindungsgemäße Vorrichtung zur Übertragung von Datenpaketen über einen gemeinsamen Daten/Adress-Bus BUS enthält, wie in der Figur 1 gezeigt, einen Daten/Adress-Bus BUS, der mit einer peripheren Einheit PE, mit einem Speicher S und mit einem Zwischenspeicher ZS mit nachfolgendem Prozessor P verbunden ist.

Weiterhin enthält die erfindungsgemäße Vorrichtung ein Steuermittel SM, welches durch jeweils eine Signalleitung mit der peripheren Einheit PE, dem Prozessor P, dem Zwischenspeicher ZS, dem Speicher S und einem Vergleicher VGL verbunden ist. Zusätzlich befindet sich noch eine Signalleitung direkt zwischen einem Vergleicher VGL und dem Prozessor P.

Zwischen der peripheren Einheit PE und dem Speicher S werden Datenpakete über den Daten/Adress-Bus BUS übertragen. Der Prozessor P hat über den Zwischenspeicher ZS ebenfalls Zugriff auf den Daten/Adress-Bus BUS. Der Zwischenspeicher ZS dient zur Abtrennung des Prozessors vom Daten/Adress-Bus BUS.

Da der Daten/Adress-Bus BUS nicht gleichzeitig für den Prozessor P und für die Übertragung der Datenpakete bereit sein kann, übernimmt ein Steuermittel SM dessen Steuerung. Von dem Prozessor P führt eine Signalleitung zum Steuermittel SM. Über diese Signalleitung wird dem Steuermittel SM mittels eines Signals der Betriebszustand, d.h., ob eine Anforderung an den Daten/Adress-Bus BUS besteht oder nicht, oder aber der Zeitraum, in dem der Daten/Adress-Bus BUS nicht benötigt wird, mitgeteilt.

Dieses Signal kann aber auch alternativ über eine Signalleitung von dem Vergleicher VGL zu dem Steuermittel SM übermittelt werden, falls dem Vergleicher VGL, ebenfalls über eine Signalleitung, vom Prozessor P der aktuell bearbeitete Befehl mitgeteilt wird und dieser im Vergleicher VGL mit einem Befehlssatz verglichen wird.

Über die Signalleitungen, die von dem Steuermittel SM jeweils zu der peripheren Einheit PE, dem Zwischenspeicher ZS und dem Speicher S führen, wird ebenfalls mittels eines Signals mitgeteilt, ob eine Übertragung stattfinden kann oder ob der Prozessor P den Daten/Adress-Bus BUS anfordert.

Von der peripheren Einheit PE wird über eine Signalleitung, die zu dem Steuermittel SM führt, ein Signal übermittelt, welches dem Steuermittel SM anzeigt, daß eine Übertragung von mindestens einem Datenpaket ansteht.

Über eine Signalleitung, die von dem Steuermittel SM zu dem Prozessor P führt, wird gegebenenfalls ein Wartesignal übermittelt, welches den Prozessor P anhält und in Wartestellung bringt.

Im folgenden Teil wird das Verfahren nach Anspruch 1 erläutert.

Die periphere Einheit PE stellt an das Steuermittel SM die Anforderung, Datenpakete zu übertragen. Die Größe der Datenpakete wird dem Steuermittel SM ebenfalls mitgeteilt.

Der Prozessor verarbeitet nacheinander unterschiedliche Befehle, deren Ausführungszeit T_{A} ebenfalls unterschiedlich ist. Für jeden Prozessor-Befehl wird der Zeitraum ermittelt, in dem kein Zugriff auf den gemeinsamen Daten/Adress-Bus erforderlich ist. Dieser Zeitraum wird dem Steuermittel in Form eines Signals mitgeteilt. Falls der Zeitraum groß genug ist, um mindestens ein Datenpaket vollständig zu übertragen, wird die Quelladresse an der peripheren Einheit PE und die Zieladresse an dem Speicher S angelegt. Danach wird mit der Datenübertragung über den Daten/Adress-Bus BUS begonnen. Steht für die Übertragung der Datenpakete ein größerer Zeitraum zur Verfügung, so muß, bevor ein weiteres Datenpaket übertragen wird, gewährleistet sein, daß dies vollständig übertragen werden kann, damit zum Zeitpunkt des Zugriffs des Prozessors P auf den Daten/Adress-Bus BUS dieser wieder frei ist.

Die Übertragung von Datenpaketen von dem Speicher S zur peripheren Einheit PE, oder von Speicher S zu Speicher S, oder von peripherer Einheit PE zu peripherer Einheit PE erfolgt nach dem selben Verfahren, nur daß Quell- und Zieladresse ihrem Bestimmungsort entsprechend eingetragen werden.

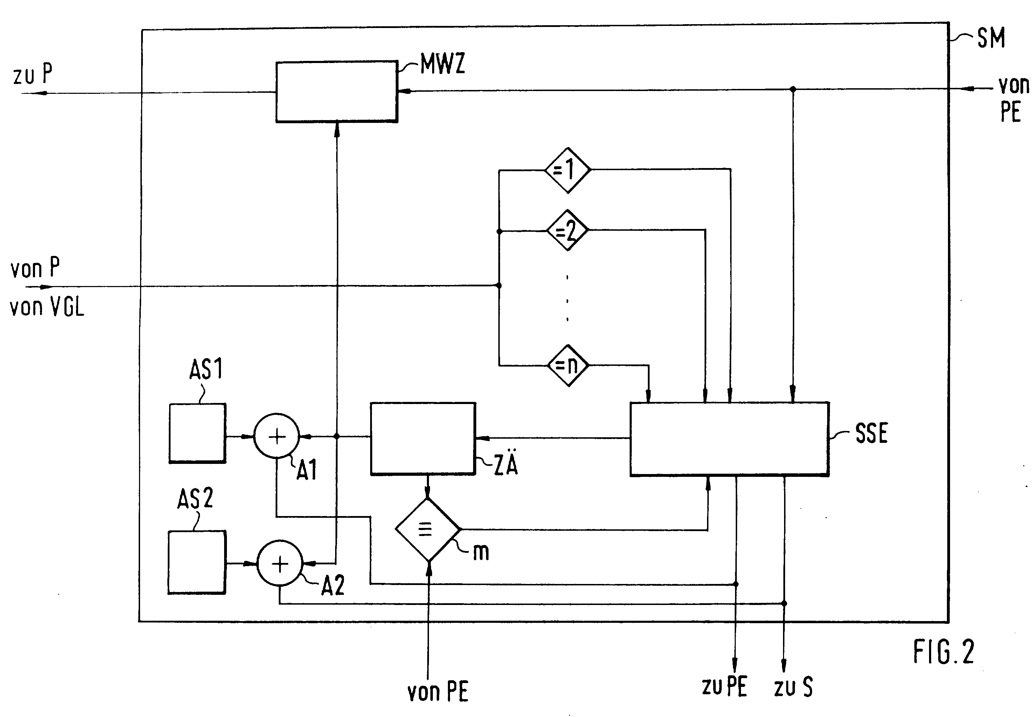

Im folgenden Teil wird die Funktion des Steuermittels SM nach Anspruch 7 zur Durchführung des Verfahrens nach einem der Ansprüche 1 bis 4 anhand von Fig. 2 erläutert.

Als Beispiel dient der Fall, daß von der peripheren Einheit PE Daten zu dem Speicher S übertragen werden sollen.

Die periphere Einheit PE stellt an das Steuermittel SM die Anforderung, Datenpakete zu übertragen. Die Größe der zu übertragenden Datenpakete wird intern, d.h. in dem Steuermittel SM, einem weiteren Vergleicher m mitgeteilt. Die Anforderung der peripheren Einheit PE wird intern über eine Signalleitung an ein Steuersignalerzeugungsmittel SSE und an Mittel MWZ zum Vergleichen der maximalen Wartezeit weitergegeben.

Von dem externen Vergleicher VGL oder von dem Prozessor P wird ein Signal erzeugt, welches dem Steuermittel SM anzeigt, daß der gemeinsame Daten/Adress-Bus BUS für einen bestimmten Zeitraum nicht vom Prozessor belegt wird. Dieses Signal wird intern auf n parallele Vergleicher 1, 2, ..., n - mit n gleich einer natürlichen Zahl - gegeben. Dort wird verglichen, ob der Zeitraum in dem der Prozessor P bei Bearbeitung des aktuellen Befehls nicht auf den Daten/Adress-Bus BUS zugreift, z.B. für die Übertragung eines Datenpaketes, also gleich 1, oder z.B. für die Übertragung von n, also gleich n, Datenpaketen ausreicht. Die n parallelen Vergleicher 1, 2, ..., n sind mit dem Steuersignalerzeugungsmittel SSE verbunden. Dort wird für den Fall, daß eine Übertragung, z.B. von der peripheren Einheit PE, angefordert wird, und für den Fall, daß für 1 bis n Zeiträume der Daten/Adress-Bus BUS nicht belegt ist, 1 bis n Steuersignale erzeugt, welche an einen Datenübertragungszähler ZÄ weitergegeben werden. Diese Steuersignale werden ebenfalls an die externe periphere Einheit PE und an den externen Speicher S weitergegeben, um anzuzeigen, daß eine Übertragung der Datenpakete stattfinden kann.

Nach jeder erfolgreichen Übertragung von Datenpaketen wird der Datenübertragungszähler ZÄ erhöht. Die aktuelle Anzahl der übertragenen Datenpakete wird in einem weiteren Vergleicher m mit der Anzahl der zu übertragenden Datenpakete verglichen. Bei Übereinstimmung wird dem Steuersignalerzeugungsmittel SSE mitgeteilt, daß die Übertragung der Datenpakete erfolgreich beendet wurde, und der Datenübertragungszähler ZÄ wird zurückgesetzt.

Die aktuelle Anzahl der übertragenen Datenpakete wird ebenso dem Mittel MWZ zum Vergleichen der maximalen Wartezeit auf einen Datentransfer mitgeteilt. Für den Fall, daß die voreingestellte maximale Wartezeit überschritten wird, d.h. wenn längere Zeit keine Erhöhung des Datenübertragungszählers ZÄ gemeldet wird, wird ein Haltesignal erzeugt und nach außen an den Prozessor P weitergeleitet. In dem Fall wird der Prozessor P sofort in den Haltezustand geschaltet, und eine Übertragung von Datenpaketen kann beginnen.

Die aktuelle Anzahl der übertragenen Datenpakete wird ebenfalls auf ein erstes Addierglied A1 und auf ein zweites Addierglied A2 weitergeleitet.

Die Quelladresse von der peripheren Einheit PE wird in einem ersten Adressenspeicher AS1 und in einem zweiten Adressenspeicher AS2 vor Beginn der Übertragung des ersten Datenpaketes voreingestellt. Von dem Adressenspeicher AS1 aus besteht eine Verbindung zu dem ersten Addierglied A1 und von dem Adressenspeicher AS2 zu dem zweiten Addierglied A2. Für den Fall, daß die Anzahl der zu übertragenden Datenpakete nicht mit der Anzahl der bereits übertragenen Datenpakete übereinstimmt, wird von dem ersten Addierglied A1 aus die Quelladresse an die periphere Einheit PE und von dem zweiten Addierglied aus an den Speicher S übertragen.

Vorteilhafterweise können die hier beschriebenen Verfahren und Vorrichtungen bei Telekommunikationsendgeräten, wie z.B. ISDN-Telefonen, Telefax, usw. verwendet werden.

## Patentansprüche

1. Verfahren zur Übertragung von Datenpaketen zwischen mindestens einer peripheren Einheit (PE) und mindestens einem Speicher (S), über einen für die mindestens eine periphere Einheit (PE), den mindestens einen Speicher (S) und einen Prozessor (P) gemeinsamen externen Daten/Adress-Bus (BUS), dadurch gekennzeichnet, daß einem Steuermittel (SM) die Größe der jeweils zu übertragenden Datenpakete sowie der Zeitraum, in dem der Prozessor (P) bei der Ausführung von Befehlen nicht auf den gemeinsamen Daten/Adress-Bus (BUS) zugreift, mitgeteilt wird, und daß das Steuermittel (SM) die Steuerung der Übertragung der Datenpakete in genau diesem Zeitraum vornimmt, falls mindestens ein zu übertragendes Datenpaket vollständig in diesem Zeitraum übertragen werden kann.

2. Verfahren nach Anspruch 1, wobei dem Steuermittel (SM) durch Voreinstellung die maximale Wartezeit zwischen aufeinanderfolgenden Übertragungen von Datenpaketen bekannt ist, und für den Fall, daß diese Wartezeit überschritten wird, der Prozessor (P) angehalten wird, in Wartestellung geschaltet wird, und eine Übertragung der Datenpakete stattfindet.

3. Verfahren nach einem der Ansprüche 1 oder 2, wobei dem Steuermittel (SM) der Zeitraum, in dem der Prozessor (P) nicht auf den gemeinsamen Daten/Adress-Bus (BUS) zugreift, durch ein vom Prozessor (P) erzeugtes Signal mitgeteilt wird.

4. Verfahren nach einem der Ansprüche 1 oder 2, wobei dem Steuermittel (SM) der Zeitraum, in dem der Prozessor (P) nicht auf den gemeinsamen Daten/Adress-Bus (BUS) zugreift, durch ein von einem Vergleicher (VGL) erzeugtes Signal angezeigt wird, wobei der Vergleicher (VGL) den momentan ausgeführten Prozessor-Befehl mit einer Befehlsliste vergleicht, in welcher für alle möglichen Prozessor-Befehle die Zeiträume bestimmt sind, in denen kein Zugriff auf den gemeinsamen Daten/Adress-Bus (BUS) stattfindet.

5. Vorrichtung zur Übertragung von Datenpaketen zwischen mindestens einer peripheren Einheit (PE) und mindestens einem Speicher (S) über einen, für die mindestens eine periphere Einheit (PE), den mindestens einen Speicher (S) und einen Prozessor (P) gemeinsamen, externen Daten/Adress-Bus (BUS), bei der der Daten/Adress-Bus (BUS) mit der mindestens einen peripheren Einheit (PE), und dem mindestens einen Speicher (S) mit nachfolgendem Prozessor (P) verbunden ist,
**dadurch gekennzeichnet**,
daß die mindestens eine periphere Einheit (PE), der mindestens eine Speicher (S), und der Prozessor (P) jeweils über eine Signalleitung mit einem Steuermittel (SM) verbunden sind,
daß dem Steuermittel (SM) die Größe der ieweils zu übertragenden Datenpakete sowie der Zeitraum, in dem der Prozessor (P) bei der Ausführung von Befehlen nicht auf den gemeinsamen Daten/Adress-Bus (BUS) zugreift, mitteilbar ist,
und daß das Steuermittel (SM) so ausgeführt ist, daß es die Steuerung der Übertragung der Datenpakete in genau diesem Zeitraum vornimmt, falls mindestens ein zu übertragendes Datenpaket vollständig in diesem Zeitraum übertragen werden kann.

6. Vorrichtung nach Anspruch 5, bei der das Steuermittel (SM) in dem Prozessor (P) integriert ist.

7. Vorrichtung nach Anspruch 5, wobei das Steuermittel (SM) n parallele Vergleicher (1, 2, ..., n) - mit n gleich einer natürlichen Zahl -, ein Steuersignalerzeugungsmittel (SSE), einen Datenübertragungszähler (ZÄ), einen weiteren Vergleicher (m), ein erstes Addierglied (A1), ein zweites Addierglied (A2), einen ersten Adressenspeicher (AS1), einen zweiten Adressenspeicher (AS2) und Mittel (MWZ) zum Vergleichen der maximalen Wartezeit auf einen Datentransfer enthält, wobei die vom Prozessor (P) oder vom Vergleicher (VGL) kommende Signalleitung mit den n parallelen Vergleichern (1, 2, ..., n) verbunden ist, deren Ausgänge auf das Steuersignalerzeugungsmittel (SSE) führen, wobei die von der mindestens einen peripheren Einheit (PE) kommende Signalleitung mit den Mitteln (MWZ) und dem Steuersignalerzeugungsmittel (SSE) verbunden ist, wobei das Steuersignalerzeugungsmittel (SSE) mit dem Datenübertragungszähler (ZÄ) verbunden ist, wobei der Datenübertragungszähler (ZÄ) mit den Mitteln (MWZ), dem weiteren Vergleicher (m), dem ersten Addierglied (A1) und dem zweiten Addierglied (A2) verbunden ist, wobei von dem ersten Addierglied (A1) und von dem Steuersignalerzeugungsmittel (SSE) eine Signalleitung zu der mindestens einen peripheren Einheit (PE) führt, wobei von dem zweiten Addierglied (A2) und von dem Steuersignalerzeugungsmittel (SSE) eine Signalleitung zu dem mindestens einen Speicher (S) führt, wobei eine Signalleitung von der mindestens einen peripheren Einheit (PE) zu dem weiteren Vergleicher (m) führt, welcher mit dem Steuersignalerzeugungsmittel (SSE) verbunden ist, wobei der erste Adressenspeicher (AS1) mit dem ersten Addierglied (A1), und der zweite Adressenspeicher (AS2) mit dem zweiten Addierglied (A2) verbunden ist, und wobei von dem Mittel (MWZ) eine Signalleitung zu dem Prozessor (P) führt.

## Claims

1. A method of transferring data packets between at least one peripheral unit (PE) and at least one memory (S) via an external data/address bus (BUS) common to the at least one peripheral unit (PE), the at least one memory (S) and a processor (P), characterised in that a control means (SM) is informed of the size of the data packets in each case to be transferred and of the time period during which the processor (P) does not access the common data/address bus (BUS) in the execution of commands, and that the control means (SM) controls the transfer of the data packets in exactly this time period if at least one data packet to be transferred can be completely transferred in this time period.

2. A method according to Claim 1 wherein, due to presetting, the control means (SM) is aware of the maximum waiting time between consecutive transfers of data packets and in the event that this waiting time is overshot, the processor (P) is stopped, switched into the waiting state, and a transfer of the data packets takes place.

3. A method according to one of Claims 1 or 2, wherein the control means (SM) is informed, via a signal generated by the processor (P), of the time period in which the processor (P) does not access the common data/address bus (BUS).

4. A method according to one of Claims 1 or 2, wherein the time period in which the processor (P) does not access the common data/address bus (BUS) is indicated to the control means (SM) by a signal generated by a comparator (VGL), wherein the comparator (VGL) compares the processor command instantaneously being executed with a command list in which the time periods in which the common data/address bus (BUS) is not accessed are specified for all the possible processor commands.

5. A device for transferring data packets between at least one peripheral unit (PE) and at least one memory (S) via an external data/address bus (BUS) common to the at least one peripheral unit (PE), the at least one memory (S) and a processor (P), wherein the data/address bus (BUS) is connected to the at least one peripheral unit (PE) and to the at least one memory (S) with following processor (P), characterised in that the at least one peripheral unit (PE), the at least one memory (S) and the processor (P) are in each case connected to a control means (SM) via a signal line, that the size of the data packets in each case to be transferred and the time period in which the process (P) does not access the common data/address bus (BUS) in the execution of commands can be communicated to the control means (SM), and that the control means (SM) is designed such that it controls the transfer of the data packets in exactly this time period if at least one data packet to be transferred can be completely transferred in this time period.

6. A device according to Claim 5, wherein the control means (SM) is integrated in the processor (P).

7. A device according to Claim 5, wherein the control means (SM) comprises n parallel comparators (1, 2, ..., n) - where n is a natural number - a control signal generating means (SSE), a data transfer counter (ZÄ), a further comparator (m), a first adder (A1), a second adder (A2), a first address memory (AS1), a second address memory (AS2) and means (MWZ) for comparing the maximum waiting time for a data transfer, wherein the signal line leading from the processor (P) or from the comparator (VGL) is connected to then parallel comparators (1, 2, ..., n) whose outputs lead to the control signal generating means (SSE), wherein the signal line leading from the at least one peripheral unit (PE) is connected to the means (MWZ) and to the control signal generating means (SSE), wherein the control signal generating means (SSE) is connected to the data transfer counter (ZÄ), wherein the data transfer counter (ZÄ) is connected to the means (MWZ), to the further comparator (m), to the first adder (A1) and to the second adder (A2), wherein a signal line leads from the first adder (A1) and from the control signal generating means (SSE) to the at least one peripheral unit (PE), wherein a signal line leads from the second adder (A2) and from the control signal generating means (SSE) to the at least one memory (S), wherein a signal line leads from the at least one peripheral unit (PE) to the further comparator (m) which is connected to the control signal generating means (SSE), wherein the first address memory (AS1) is connected to the first adder (A1) and the second address memory (AS2) is connected to the second adder (A2) and wherein a signal line leads from the means (MWZ) to the processor (P).

## Revendications

1. Procédé de transmission de paquets de données entre au moins une unité périphérique (PE) et au moins une mémoire (S), par le biais d'un bus de données/d'adresses externe (BUS) commun à l'unité périphérique (PE), au moins au nombre de une, à la mémoire (S), au moins au nombre de une, et à un processeur (P), caractérisé en ce que la dimension des paquets de données respectifs à transmettre, ainsi que la période de temps pendant laquelle le processeur (P) n'accède pas au bus de données/d'adresses (BUS) commun lors de l'exécution des ordres, sont communiquées à un moyen de commande (SM), et en ce que le moyen de commande (SM) assure la commande de la transmission des paquets de données précisément pendant cette période de temps si au moins un paquet de données à transmettre peut être transmis complètement pendant cette période.

2. Procédé selon la revendication 1, dans lequel le moyen de commande (SM) connaît, par préréglage, le temps d'attente maximal entre des transmissions successives de paquets de données et, dans le cas où ce temps d'attente est dépassé, le processeur (P) est arrêté, commuté en position d'attente, et une transmission des paquets de données a lieu.

3. Procédé selon l'une des revendications 1 ou 2, dans lequel la période de temps pendant laquelle le processeur (P) n'accède pas au bus de données/d'adresses (BUS) commun est communiquée au moyen de commande (SM) par un signal produit par le processeur (P).

4. Procédé selon l'une des revendications 1 ou 2, dans lequel la période de temps pendant laquelle le processeur (P) n'accède pas au bus de données/d'adresses (BUS) commun est communiquée au moyen de commande (SM) par un signal produit par un comparateur (VGL), dans lequel le comparateur (VGL) compare l'ordre de processeur exécuté à ce moment-là avec une liste d'ordres sur laquelle sont définies, pour tous les ordres de processeur possibles, les périodes de temps pendant lesquelles aucun accès au bus de données/d'adresses (BUS) commun n'intervient.

5. Dispositif de transmission de paquets de données entre au moins une unité périphérique (PE) et au moins une mémoire (S), par le biais d'un bus de données/d'adresses externe (BUS) commun à l'unité périphérique (PE), au moins au nombre de une, à la mémoire (S), au moins au nombre de une, et à un processeur (P), dans lequel le bus de données/d'adresses (BUS) avec l'unité périphérique (PE), au moins au nombre de une, et avec la mémoire (S), au moins au nombre de une, est raccordé au processeur suivant (P),
caractérisé en ce que l'unité périphérique (PE), au moins au nombre de une, la mémoire (S), au moins au nombre de une, et le processeur (P) sont respectivement raccordés à un moyen de commande (SM) par le biais d'une ligne de signaux,
en ce que en ce que la dimension des paquets de données respectifs à transmettre, ainsi que la période de temps pendant laquelle le processeur (P) n'accède pas au bus de données/d'adresses (BUS) commun lors de l'exécution des ordres, peuvent être communiqués au moyen de commande (SM),
et en ce que le moyen de commande (SM) est réalisé de sorte qu'il assure la commande de la transmission des paquets de données précisément pendant cette période si au moins un paquet de données à transmette peut être transmis complètement pendant cette période de temps.

6. Dispositif selon la revendication 5, dans lequel le moyen de commande (SM) est intégré dans le processeur (P).

7. Dispositif selon la revendication 5, dans lequel le moyen de commande (SM) comporte n comparateurs parallèles (1, 2, ..., n) - n étant égal à un nombre naturel -, un moyen de production de signaux de commande (SSE), un compteur de transmission de données (ZÄ), un autre comparateur (m), un premier organe d'addition (A1), un deuxième organe d'addition (A2), une première mémoire d'adresses (AS1), une deuxième mémoire d'adresses (AS2) et des moyens (MWZ) pour comparer le temps d'attente maximal d'un transfert de données, dans lequel la ligne de signaux provenant du processeur (P) ou du comparateur (VGL) est raccordée aux n comparateurs parallèles (1, 2, ..., n) dont les sorties conduisent au moyen de production de signaux de commande (SSE), dans lequel la ligne de signaux provenant de l'unité périphérique (PE), au moins au nombre de une, est raccordée aux moyens (MWZ) et au moyen de production de signaux de commande (SSE), dans lequel le moyen de production de signaux de commande (SSE) est raccordé au compteur de transmission de données (ZÄ), dans lequel le compteur de transmission de données (ZÄ) est raccordé aux moyens (MWZ), à l'autre comparateur (m), au premier organe d'addition (A1) et au deuxième organe d'addition (A2), dans lequel, depuis le premier organe d'addition (A1) et depuis le moyen de production de signaux de commande (SSE), une ligne de signaux conduit à l'unité périphérique (PE), au moins au nombre de une, dans lequel, depuis le deuxième organe d'addition (A2) et depuis le moyen de production de signaux de commande (SSE), une ligne de signaux conduit à la mémoire (S), au moins au nombre de une, dans lequel une ligne de signaux depuis l'unité périphérique (PE), au moins au nombre de une, conduit à l'autre comparateur (m) qui est raccordé au moyen de production de signaux de commande (SSE), dans lequel la première mémoire d'adresses (AS1) est raccordée au premier organe d'addition (A1), et la deuxième mémoire d'adresses (AS2) est raccordée au deuxième organe d'addition (A2), et dans lequel, depuis le moyen (MWZ), une ligne de signaux conduit au processeur (P).
